Europäisches Patentamt

European Patent Office

Office européen des brevets

(19)

(11) Veröffentlichungsnummer: **0 116 869
B1**

(12) **EUROPÄISCHE PATENTSCHRIFT**

(45) Veröffentlichungstag der Patentschrift:
**29.10.86**

(21) Anmeldenummer: **84100633.1**

(22) Anmeldetag: **21.01.84**

(51) Int. Cl.⁴: **H 02 K  33/02,** B 05 B  9/04

(54)  **Schwingankermotor zum Antrieb elektrischer Geräte.**

(30)  Priorität: **18.02.83  DE 3305656**

(43)  Veröffentlichungstag der Anmeldung:
**29.08.84 Patentblatt 84/35**

(45)  Bekanntmachung des Hinweises auf die Patenterteilung:
**29.10.86 Patentblatt 86/44**

(84)  Benannte Vertragsstaaten:
**CH DE FR GB IT LI NL**

(56)  Entgegenhaltungen:
**DE - B - 2 653 981
US - A - 1 684 260
US - A - 2 218 837**

(73)  Patentinhaber: **J. Wagner GmbH,
Eisenbahnstrasse 18-26, D-7990 Friedrichshafen 12 (DE)**

(72)  Erfinder: **Kille, Ewald, Strandbadstrasse 2,
D-7990 Friedrichshafen (DE)**
Erfinder: **Griebel, Heinrich, Strandbadstrasse 6,
D-7990 Friedrichshafen (DE)**

(74)  Vertreter: **Engelhardt, Guido, Dipl.-Ing.,
Montafonstrasse 35 Postfach 1350,
D-7990 Friedrichshafen 1 (DE)**

## Beschreibung

Die Erfindung bezieht sich auf einen Schwingankermotor zum Antrieb elektrischer Geräte, der insbesondere zum Antrieb von Kolbenpumpen für Farbspritzpistolen, Membran-Kompressoren oder dgl. verwendbar ist und aus einem eine Magnetspule aufnehmenden Stator und einem diesem zugeordneten Anker, der an einem Ende gelenkig gelagert ist und dessen anderes Ende auf das zu betätigende Glied des Gerätes einwirkt, besteht.

Antriebsmotoren dieser Art sind in sehr zahlreichen Ausgestaltungen bekannt und haben sich in der Praxis auch ausserordentlich gut bewährt. Um hierbei den Aufschlag des um eine Achse schwenkbar gelagerten Ankers auf dem feststehenden Stator zu dämpfen und somit die Betriebsgeräusche zu mindern, wird vielfach in das den Stator aufnehmende Gehäuse auf der dem Anker zugekehrten Seite eine Tasche eingearbeitet, in die eine Gummischeibe als Anschlag eingesetzt ist. Die Abmessungen der Tasche wie auch der Gummischeibe sind jedoch mit Toleranzen behaftet und können somit schwanken, so dass die Stelle, an der der Anker zum Stillstand kommt und in seiner Bewegungsrichtung umgekehrt wird, nicht exakt festgelegt werden kann. Ragt z.B. die Gummischeibe weit über die Stirnfläche des Stators hinaus, so ist der Restluftspalt gross und der Antriebsmotor weist einen ungünstigen Wirkungsgrad auf, ist dagegen der Überstand gering, wird diese zusammengedrückt und der metallische Anker schlägt auf den metallischen Stator auf, erhebliche Betriebsgeräusche sind die Folge. Die Stellung des Ankers, in der dieser seine Bewegungsrichtung wechselt, ist somit mit Hilfe der bekannten Ausgestaltung nicht vorher exakt bestimmbar, auch ist von erheblichem Nachteil, dass eine Einstellung bzw. eine Nachstellung des Anschlages nicht vorgenommen werden kann. Dieser kann lediglich durch Austausch einer Gummischeibe verändert werden. (Siehe z.B. die Gummischeibe 10 gemäss der DE-B-26 53 981).

Aufgabe der Erfindung ist es daher, den Schwingankermotor der vorgenannten Gattung in der Weise zu verbessern, dass die Zustellbewegung des Ankers mit einfachen Mitteln leicht und exakt gesteuert und eingestellt werden kann und dass ohne Schwierigkeiten auch eine Nachstellung oder Veränderung des mit dem Anker zusammenwirkenden Anschlages zu bewerkstelligen ist. Des weiteren soll erreicht werden, dass das Aufschlagen des metallischen Ankers auf den Stator zuverlässig vermieden ist und dass dadurch bedingte Beschädigungen somit nahezu ausgeschlossen sind und dass die Betriebsgeräusche äusserst gering gehalten werden.

Gemäss der Erfindung wird dies bei einem Schwingankermotor mit einem einseitig gelenkig gelagerten Anker dadurch erreicht, dass zur Steuerung der Zustellbewegung des auf das zu betätigende Glied einwirkenden Endes des Ankers dieser mittels eines Koppelgliedes, dessen Anlenkungen in Abhängigkeit von der Schwenkbewegung des Ankers gegeneinander veränderbar sind, zwangsläufig mit einem ortsfesten Bauteil verbunden ist.

Als Koppelglied kann zur Begrenzung der Schliessbewegung des Ankers ein zweiarmiger Gelenkhebel, der sich etwa senkrecht zu diesem erstreckt und mit einem Ende vorzugsweise in dem dem zu betätigenden Glied des Gerätes zugeordneten Bereich des Ankers und mit dem anderen Ende an einem ortsfesten Bauteil angelenkt ist, vorgesehen werden, wobei dem Gelenkhebel ein mit einem der verschwenkbaren Hebelarme unmittelbar oder über ein Zwischenglied zusammenwirkender Anschlag zugeordnet ist, mittels dem der die Zustellung des Ankers in Richtung des Stators bestimmende Verschwenkbereich des Gelenkhebels begrenzbar ist.

Zweckmässig ist es hierbei, den Gelenkhebel mittels eines den Anker durchgreifenden Lagerbolzens mit diesem gelenkig zu verbinden, wobei es vorteilhaft ist, das zu betätigende Glied des Gerätes ebenfalls an dem Lagerbolzen anzulenken, vorzugsweise in diesen einzuhängen.

Ferner ist es angebracht, das ortsfest abgestützte Ende des Gelenkhebels mittels eines Gelenkbolzens in einem an einer Wand des den Schwingankermotor aufnehmenden Gehäuses angeformten Lagerauge od.dgl. verschwenkbar zu halten, wobei einer der beiden Arme des Gelenkhebels, vorzugsweise der an dem Anker angelenkte Hebelarm, an dem den anderen Hebelarm aufnehmenden Ende ein Gabelstück aufweisen sollte, in das der ortsfest angelenkte Hebelarm eingreift und in den dieser mittels eines Gelenkbolzens angelenkt ist.

Als Zwischenglied kann nach einer Weiterbildung eine an einem der Hebelarme des Gelenkhebels, vorzugsweise an dem an dem ortsfesten Bauteil angelenkten Hebelarm befestigte und von diesem abstehende Platte vorgesehen werden, bei deren Anlage zu dem Anschlag der Gelenkhebel fixiert ist. Auf diese Weise ist, da die Platte entsprechend gross gewählt werden kann, eine besondere Feineinstellung der Endlage des Ankers zu bewerkstelligen.

Der Anschlag ist in einfacher Ausgestaltung durch eine etwa senkrecht zu dem Gelenkhebel oder etwa achsparallel zu diesem angeordnete, vorzugsweise in einer Wandung des Gehäuses eingesetzte Kappe aus elastischem Werkstoff zu bilden, dieser kann aber auch verstellbar angeordnet, beispielsweise in einer mittels einer in einer Gewindebohrung zustellbar gehaltenen Hülse eingesetzt sein.

Nach einer andersartigen Ausgestaltung ist das Koppelglied durch eine oder mehrere an dem Stator drehbar gelagerte Kurvenscheiben und eine oder mehrere an diesen und dem Anker angelenkte Drehfedern gebildet.

Bei dieser Ausgestaltung ist es angebracht, die Kurvenscheibe auf einem in einem gabelförmig ausgebildeten, mittig angeordneten Ansatz des Stators gehaltenen Bolzen drehbar zu lagern, es ist aber auch möglich, Kurvenscheiben in einem oder beiden Randbereichen des Stators anzuord-

nen und auf in an diesem angebrachten Ansätzen gehaltenen Bolzen drehbar abzustützen.

Zweckmässig ist es hierbei ferner, das Ende des zu betätigenden Gliedes mit einer die an dem Stator angebrachten Ansätze und/oder die Kurvenscheiben aufnehmenden Aussparung zu versehen, vorzugsweise gabelförmig auszubilden.

Auf diese Weise wird ein Verkanten des zu betätigenden Gliedes weitgehend ausgeschlossen.

Damit die Drehfeder fest eingespannt ist und die sich zwangsläufig ergebenden Lageänderungen dennoch ausgeglichen werden können, ist es des weiteren vorteilhaft, deren eines Ende in einen an dem Anker angebrachten Bolzen und deren anderes Ende in einer sich achssenkrecht zur Verstellbewegung des Ankers erstreckenden in die Kurvenscheibe eingearbeiteten Aufnahmenut oder einer Bohrung einzuhängen.

Zur Verminderung der Reibung können des weiteren die Anlageflächen der Kurvenscheiben an dem Anker durch eine oder mehrere an diesem angebrachte drehbar gelagerte Scheiben gebildet werden.

Auch kann das zu betätigende Glied des Gerätes an dem Anker angelenkt, vorzugsweise mittels des die an diesem angebrachten drehbaren Scheiben tragenden Bolzen gelenkig befestigt sein.

Ferner sollte die Aussenkontur der Kurvenscheibe derart gewählt sein, dass diese in jeder Schwenkstellung des Ankers stets an der gleichen Stelle an diesem anliegt. Auch auf diese Weise wird die Reibung gemindert.

Die Aussenkontur der Kurvenscheibe und die Anlenkungen der Drehfeder können aber auch in der Weise gewählt werden, dass in der Drehfeder über den gesamten Schwenkbereich des Ankers keine Federarbeit auftritt.

Durch die gemäss der Erfindung vorgesehene Ausgestaltung eines Schwingankermotors ist es mit sehr einfachen Mitteln möglich, die Zustellbewegung des Ankers zu steuern und damit den Restluftspalt zwischen diesem und dem Stator exakt einzustellen, so dass zuverlässig verhindert ist, dass die metallischen Teile aufeinander schlagen und dabei hohe Betriebsgeräusche hervorgerufen werden. Wird nämlich der Anker mittels eines unterschiedlich auszubildenden Koppelgliedes, dessen Anlenkungen in Abhängigkeit von der Schwenkbewegung des Ankers gegeneinander veränderbar sind, zwangsläufig mit einem ortsfesten Bauteil verbunden, so ist es möglich, die Zustellbewegung des Ankers mit Hilfe des Koppelgliedes zu begrenzen und damit zu steuern. Der Restluftspalt zwischen dem Anker und dem Stator kann auf diese Weise, da bei entsprechender Auslegung der Hebelarme des als Gelenkhebel ausgebildeten Koppelgliedes oder mit Hilfe des an diesen angebrachten Zwischengliedes bzw. der Kurvenscheibe eine sehr exakte Feineinstellung vorzunehmen ist, klein gewählt werden, so dass der Schwingankermotor stets mit einem hohen elektrischen Wirkungsgrad arbeiten kann. Und da die zusammenwirkenden Teile verhältnismässig gross gewählt werden können bzw. der Anschlag nachstellbar auszubilden ist, ist auch ein evtl. Verschleiss gering bzw. dieser kann leicht ausgeglichen werden. Bei einfacher Handhabung wird somit das Betriebsverhalten des bekannten Schwingankermotors in einem erheblichen Masse verbessert.

In der Zeichnung sind zwei Ausführungsbeispiele eines gemäss der Erfindung ausgebildeten Schwingankermotors zum Antrieb eines Membran-Kompressors und eines Kolbens einer Kolbenpumpe dargestellt und nachfolgend im einzelnen erläutert. Hierbei zeigen:

Fig. 1 den in einem kreisförmigen Gehäuse eingebauten einen Membran-Kompressor antreibenden Schwingankermotor mit einem an dem Anker angebrachten zweiarmigen Gelenkhebel als Koppelglied und einem mit diesem zusammenwirkenden Anschlag, teilweise im Schnitt,

Fig. 2 eine geringfügig andersartige Ausgestaltung des Gelenkhebels und des diesem zugeordneten Anschlages,

Fig. 3 einen in einer Farbspritzpistole eingesetzten Schwingankermotor zum Antrieb einer Kolbenpumpe mit einem durch eine Kurvenscheibe und einer Drehfeder gebildeten Koppelglied,

Fig. 4 den Schwingankermotor nach Fig. 3 in einer Seitenansicht ohne Pumpkolben in Richtung des Pfeiles A und

Fig. 5 eine andersartige Ausgestaltung des Schwingankermotors nach Fig. 3.

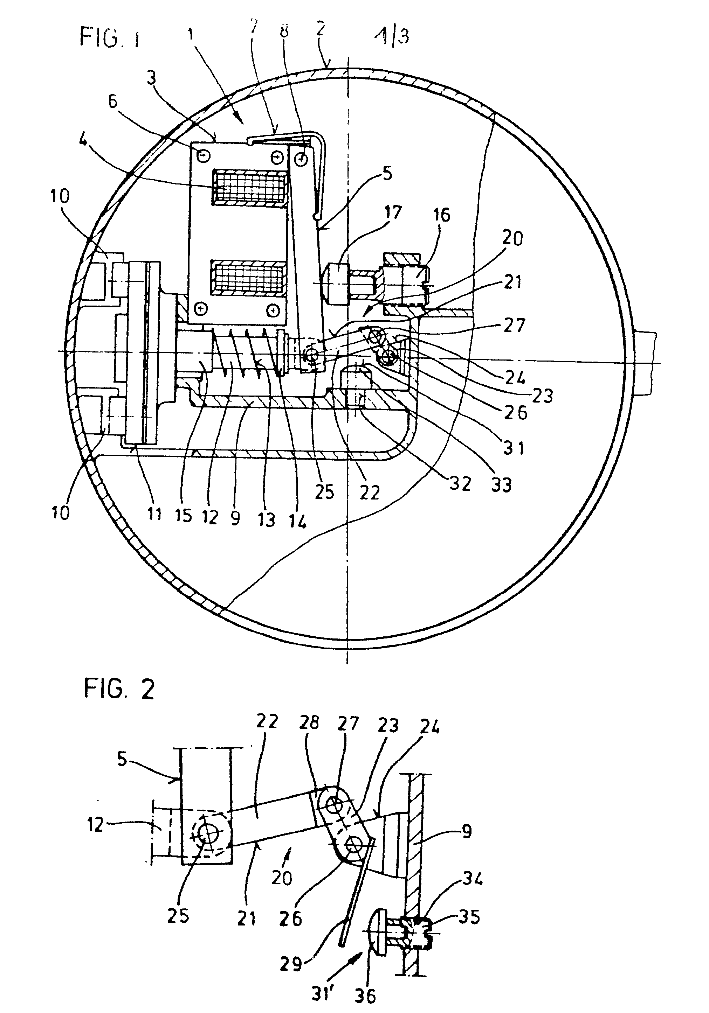

Der in Fig. 1 dargestellte, in dem kreisförmigen Gehäuse 2 eingebaute und mit 1 bezeichnete Schwingankermotor besteht aus einem ortsfesten Stator 3, der eine Magnetspule 4 trägt und mittels Schrauben 6 an dem Gehäuse 2 befestigt ist, und einem mittels einer Haltefeder 7 verschwenkbar mit dem Stator 3 verbundenen Anker 5. Das freie Ende des um ein Lager 8 verschwenkbaren Ankers 5 ist mit einem Stössel 12 eines Membran-Kompressors 11 verbunden, der in einer Halterung 10 befestigt und mittels dem Druckluft zu erzeugen ist.

Wird die Magnetspule 4 des Stators 3 an einen Stromkreis angeschlossen und somit erregt, so wird durch das sich aufbauende magnetische Feld der Anker 5 von dem Stator 3 mit Unterstützung der Kraft der Haltefeder 7, aber entgegen der Kraft der Feder 13, die sich an dem an dem Stössel 12 angebrachten Bund 14 und dem an dem Membran-Kompressor 11 vorgesehenen Bund 15 abstützt, angezogen und wirkt auf den mit der Membrane des Membran-Kompressors 11 verbundenen Stössel 12 ein, so dass durch die hin- und hergehenden Bewegungen in dem Membran-Kompressor 11 die angesaugte Luft komprimiert und ausgestossen wird. Mittels einer Regelschraube 16, die in eine Gehäusewandung 9 eingeschraubt ist und eine Kappe 17 aus elastisch verformbarem Werkstoff trägt, ist der Hub des Ankers 5 stufenlos veränderbar.

Um zu vermeiden, dass der von dem sich aufbauenden Magnetfeld angezogene Anker 5 bei jeder Zustellbewegung auf dem Stator 3 aufschlägt und damit hohe Betriebsgeräusche verursacht, ist zusammen mit dem Stössel 12 an dem Anker 5 mittels eines Bolzens 25 als Koppelglied 20 ein zweiarmiger Gelenkhebel 21 angelenkt und in der Gehäusewandung 9 ist ein Anschlag 31 vorgesehen, durch den die Schwenkbewegung des Gelenkhebels 21 in Richtung der Zustellbewegung des Ankers 5 begrenzbar ist.

Der Anschlag 31 besteht bei der Ausgestaltung nach Fig. 1 aus einer in einer Bohrung 32 der Gehäusewandung 9 eingesetzten Kappe 33 aus elastisch verformbarem Werkstoff, nach Fig. 2 ist der Anschlag 31' aus einer in einer Hülse 35 eingesetzten Kappe 36 aus elastisch verformbarem Werkstoff gebildet. Die Hülse 35 ist hierbei in einer Gewindebohrung 34 der Gehäusewandung 9 eingeschraubt, so dass der Anschlag 31' in seiner Lage verändert werden kann.

Der Anschlag 31 wirkt mit dem Arm 22 des sich etwa in Achsrichtung des Stössels 12 erstreckenden Gelenkhebels 21 unmittelbar zusammen und ist somit senkrecht zu diesem angeordnet, bei der Ausgestaltung nach Fig. 2 dagegen ist an dem Arm 23 eine Anschlagplatte 29 befestigt, deren Verstellweg durch den etwa parallel zu dem Gelenkhebel 21 angeordneten Anschlag 31' begrenzbar ist. Der Hebelarm 23 ist mittels eines Bolzens 26 an einem ortsfesten an der Gehäusewandung 9 angebrachten Auge 24 drehbar gelagert und greift in ein Gabelstück 28 ein, das an dem Hebelarm 22 vorgesehen ist und diesen aufnimmt. Mittels eines weiteren Gelenkbolzens 27 sind die beiden Hebelarme 22 und 23 des Gelenkhebels 21 gelenkig miteinander verbunden.

Durch die Anlenkung des Ankers 5 mit Hilfe des Gelenkhebels 21 als Koppelglied 20 an der Gehäusewandung 9 und mit dem im Schwenkbereich des Gelenkhebels 21 vorgesehenen Anschlag 31 bzw. 31' ist gewährleistet, dass der Anker 5 beim Schliessen nicht auf den Stator 3 aufschlägt und dass der Schwenkbereich exakt zu begrenzen ist, so dass der Restluftspalt klein gehalten werden kann und stets ein optimaler elektrischer Wirkungsgrad des Schwingankermotors 1 gegeben ist.

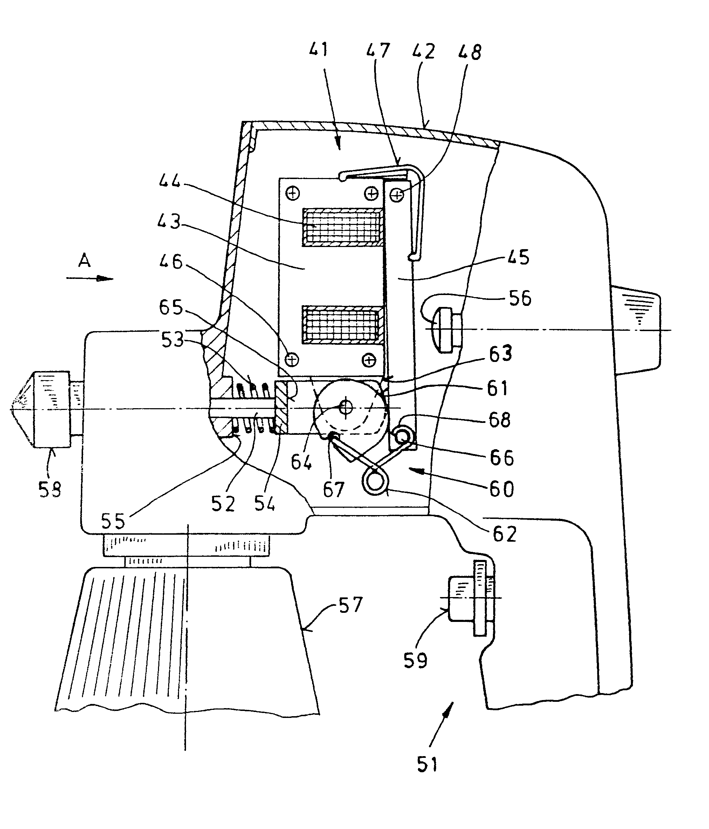

Der in den Fig. 3, 4 und 5 dargestellte Schwingankermotor 41 besteht ebenfalls aus einem ortsfesten Stator 43, der mit einer Magnetspule 44 versehen ist, und einem um einen Lagerzapfen 48 verschwenkbaren über eine Feder 47 mit dem Stator 43 verbundenen Anker 45. Mittels Schrauben 46 ist der Stator 43 in einem Gehäuse 42 gehalten.

Das Gerät, dem der Schwingankermotor 41 zugeordnet ist, ist hierbei als Spritzpistole 51 ausgebildet. Der Anker 45 wirkt somit auf einen Pumpkolben 52 einer nicht gezeigten Kolbenpumpe ein, durch die das zu versprühende Medium aus einem an dem Gehäuse 42 angeschraubten Farbbehälter 57 angesaugt und durch eine Düse 58 ausgestossen wird. Zum Einschalten des Schwingankermotors 41 ist ein Schalter 59 vorgesehen.

Wird die Magnetspule 44 an einen Stromkreis angeschlossen und somit erregt, so wird durch das sich aufbauende Magnetfeld der Anker 45 wiederum von dem Stator 43 mit Unterstützung der Feder 47 angezogen. Dabei ist allerdings die Kraft der Rückstellfeder 53 zu überwinden, die sich an einem an dem Pumpkolben 52 vorgesehenen Bund 54 sowie einer an dem Gehäuse 42 angearbeiteten Fläche 55 abstützt. Durch die hin- und hergehenden Bewegungen des Pumpkolbens 52, wobei der Verstellbereich des Ankers 45 durch eine Regelschraube 56 eingestellt werden kann, wird somit das zu versprühende Medium aus dem Vorratsbehälter 57 angesaugt und aus der Zerstäuberdüse 58 ausgestossen.

Bei dem Schwingankermotor 41 ist als Koppelglied 60 zur zwangsläufigen Verbindung des Ankers 45 mit einem ortsfesten Bauteil eine drehbar gelagerte Kurvenscheibe 61 sowie eine Drehfeder 62 vorgesehen, deren Anlenkungen in Abhängigkeit von der Schwenkbewegung des Ankers 45 gegeneinander veränderbar sind. Um dies auf einfache Weise bewerkstelligen zu können, ist hierbei an dem Stator 43 ein gabelförmiger Ansatz 63 angebracht, in dem auf einem Bolzen 64 die Kurvenscheibe 61 drehbar gehalten ist, und in den Anker 45 ist ein aus diesem seitlich herausragender Stift 66 eingesetzt; ausserdem ist in die Kurvenscheibe 61 eine Nut 67 eingearbeitet, so dass die Drehfeder 62 mit ihren Enden 68 und 69 an dem Stift 66 sowie der Nut 67 einzuhängen ist. Trotz des sich ständig verändernden Abstandes zwischen dem Stift 66 und der Nut 67 in Abhängigkeit von der Zustellbewegung des Ankers 45 ist somit dennoch eine zwangsläufige Verbindung gegeben und der Anker 45 liegt ständig an der Kurvenscheibe 61 an.

Die Aussenkontur der Kurvenscheibe 61 und die durch den Stift 66 sowie die Nut 67 gebildeten Anlenkungen der Drehfeder 62 sind hierbei derart gewählt, dass über den gesamten Schwenkbereich des Ankers 45 in der Drehfeder 62 keine Federarbeit auftritt. Dadurch werden Energieverluste vermieden. Selbstverständlich ist durch die Wahl der Aussenkontur der Kurvenscheibe 61 der Restluftspalt zwischen dem Stator 43 und dem Anker 45 einzustellen. Und da der Anker 45 immer an der Kurvenscheibe 61 anliegt, treten Aufschlaggeräusche nicht auf.

Bei dem Ausführungsbeispiel nach den Fig. 3 und 4 ist das Ende des Pumpkolbens 52, auf das der Anker 45 einwirkt, gabelförmig ausgebildet und somit mit einer Ausnehmung 65 versehen, in die der Ansatz 63 des Stators 43 sowie die Kurvenscheibe 61 hineinragen. Der Anker 45 liegt somit in seinem äusseren Bereich an dem Pumpkolben 52 an, Verkantungen sind dadurch nahezu ausgeschlossen.

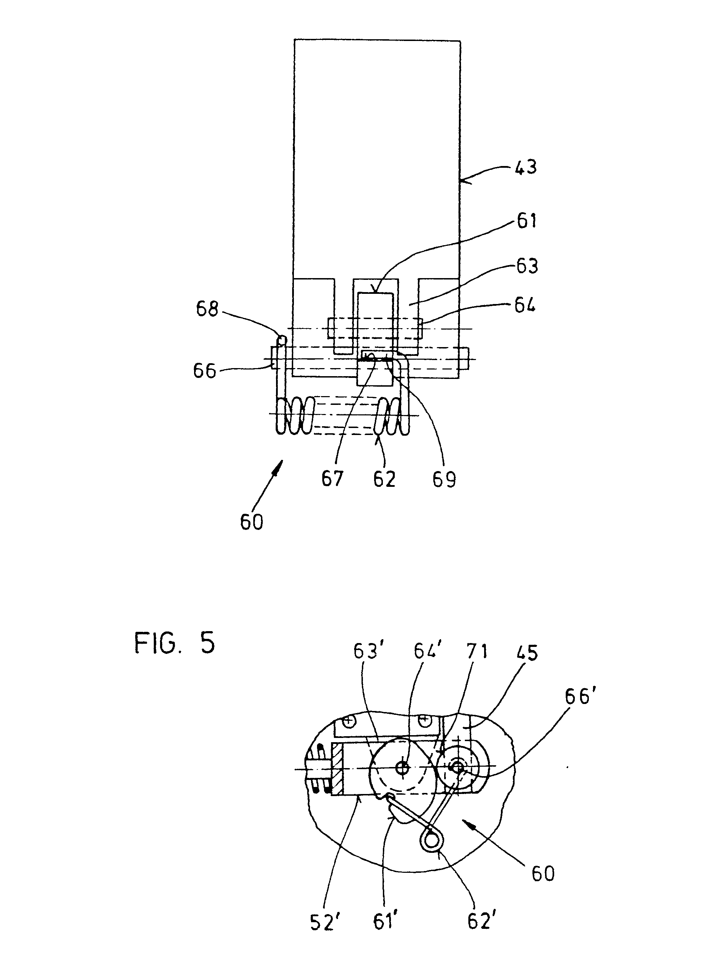

Bei den Ausführungsvarianten nach Fig. 5 sind dagegen in den Randbereichen des Stators 43 Ansätze 63' angebracht, in denen Bolzen 64' gehalten sind, die drehbare Kurvenscheiben 61' tragen. Der Pumpkolben 52' umgreift mit seinem ebenfalls gabelförmig ausgebildeten Ende die Ansätze 63' sowie die mittels eines Bolzens 66', an denen die Drehfedern 62' mit einem Ende eingehängt sind, an dem Anker 45 angelenkten Kurvenscheiben 61'. Die Anlagefläche, mit der sich der Anker 45 an den Kurvenscheiben 61' abstützt, ist bei diesem Ausführungsbeispiel durch verdrehbare Scheiben oder Rollen 71 gebildet, die ebenfalls auf den Bolzen 66' gelagert sind. Auf diese Weise wird die Reibung an den sich berührenden Teilen weiter gemindert.

Die Kurvenscheiben 61' bilden somit einen verstellbaren Anschlag, an dem der Anker 45 mit Hilfe des Koppelgliedes 60 ständig anliegt, so dass die Zustellbewegungen des Ankers 45 sowie der Restluftspalt zwischen diesem und dem Stator 43 leicht zu steuern sind.

**Patentansprüche**

1. Schwingankermotor zum Antrieb elektrischer Geräte, insbesondere zum Antrieb von Kolbenpumpen für Farbspritzpistolen, Membran-Kompressoren od.dgl. mit einem eine Magnetspule (4; 44) aufnehmenden Stator (3; 43) und einem diesem zugeordneten Anker (5; 45), der an einem Ende gelenkig gelagert ist und dessen anderes Ende auf das zu betätigende Glied des Gerätes einwirkt, dadurch gekennzeichnet, dass zur Steuerung der Zustellbewegung des auf das zu betätigende Glied (Stössel 12; Kolben 52) einwirkenden Endes des Ankers (5; 45) dieser mittels eines Koppelgliedes (20; 60), dessen Anlenkungen (25; 26; 66, 67) in Abhängigkeit von der Schwenkbewegung des Ankers (5; 45) gegeneinander veränderbar sind, zwangläufig mit einem ortsfesten Bauteil (Wand 9; Stator 43) des Motors verbunden ist.

2. Schwingankermotor nach Anspruch 1, dadurch gekennzeichnet, dass als Koppelglied (20) zur Begrenzung der Schliessbewegung des Ankers (5) ein zweiarmiger Gelenkhebel (21), der sich etwa senkrecht zu diesem erstreckt und mit einem Ende vorzugsweise in dem dem zu betätigenden Glied (Stössel 12) des Gerätes (Kompressor 11) zugeordneten Bereich des Ankers und mit dem anderen Ende an einem ortsfesten Bauteil (Auge 24) angelenkt ist, vorgesehen ist und dass dem Gelenkhebel (21) ein mit einem der verschwenkbaren Hebelarme (22, 23) unmittelbar oder über ein Zwischenglied (29) zusammenwirkender Anschlag (31, 31') zugeordnet ist, mittels dem der die Zustellung des Ankers (5) in Richtung des Stators (3) bestimmende Verschwenkbereich des Gelenkhebels (21) begrenzbar ist.

3. Schwingankermotor nach Anspruch 1 oder 2, dadurch gekennzeichnet, dass der Gelenkhebel (21) mittels eines den Anker (5) durchgreifenden Lagerbolzens (25) mit diesem gelenkig verbunden ist.

4. Schwingankermotor nach Anspruch 3, dadurch gekennzeichnet, dass das zu betätigende Glied (Stössel 12) des Gerätes (Kompressor 11) an dem den Gelenkhebel (21) mit dem Anker (5) verbindenden Lagerbolzen (25) angelenkt, vorzugsweise in diesen eingehängt ist.

5. Schwingankermotor nach einem der Ansprüche 1 bis 4, dadurch gekennzeichnet, dass das ortsfest abgestützte Ende des Gelenkhebels (21) mittels eines Gelenkbolzens (26) in einem an einer Wand (9) des den Schwingankermotor (1) aufnehmenden Gehäuses (2) angeformten Lagerauge (24) oder dgl. verschwenkbar gehalten ist.

6. Schwingankermotor nach einem der Ansprüche 1 bis 5, dadurch gekennzeichnet, dass einer der beiden Arme (22, 23) des Gelenkhebels (21), vorzugsweise der an dem Anker (5) angelenkte Hebelarm (22), an dem den anderen Hebelarm (23) aufnehmenden Ende ein Gabelstück (28) aufweist, in das der ortsfest angelenkte Hebelarm (23) eingreift und in dem dieser mittels eines Gelenkbolzens (27) angelenkt ist.

7. Schwingankermotor nach einem der Ansprüche 1 bis 6, dadurch gekennzeichnet, dass als Zwischenglied eine an einem der Hebelarme (22, 23) des Gelenkhebels (21), vorzugsweise an dem an dem ortsfesten Bauteil (24) angelenkten Hebelarm (23) befestigte und von diesem abstehende Platte (29) vorgesehen ist, bei deren Anlage an dem Anschlag (31') der Gelenkhebel (21) fixiert ist.

8. Schwingankermotor nach einem der Ansprüche 1 bis 7, dadurch gekennzeichnet, dass der Anschlag (31, 31') durch eine etwa senkrecht zu dem Gelenkhebel (21) oder etwa achsparallel zu diesem angeordnete, vorzugsweise in einer Wandung (9) des Gehäuses (1) eingesetzten Kappe (33; 36) aus elastisch verformbarem Werkstoff gebildet ist.

9. Schwingankermotor nach Anspruch 8, dadurch gekennzeichnet, dass der Anschlag (31') verstellbar angeordnet, beispielsweise in einer mittels einer in einer Gewindebohrung (34) verstellbar gehaltenen Hülse (35) eingesetzt ist.

10. Schwingankermotor nach Anspruch 1, dadurch gekennzeichnet, dass das Koppelglied (60) durch eine oder mehrere an dem Stator (43) drehbar gelagerte Kurvenscheiben (61, 61') und eine oder mehrere an diesen und dem Anker (45) angelenkte Drehfedern (62, 62') gebildet ist.

11. Schwingankermotor nach Anspruch 1 oder 10, dadurch gekennzeichnet, dass die Kurvenscheibe (61) auf einem in einem gabelförmig ausgebildeten, mittig angeordneten Ansatz (63) des Stators (43) gehaltenen Bolzen (64) drehbar gelagert ist.

12. Schwingankermotor nach Anspruch 1 oder 10, dadurch gekennzeichnet, dass die Kurvenscheibe (61') in einem oder beiden Randbereichen des Stators (43) angeordnet und auf in an diesem angebrachten Ansätzen (63') gehaltenen Bolzen (64') drehbar gelagert ist.

13. Schwingankermotor nach einem der Ansprüche 1, 11 und 12, dadurch gekennzeichnet, dass das Ende des zu betätigenden Gliedes (Kolben 52) mit einer die an dem Stator (43) angebrachten Ansätze (63) und/oder die Kurvenscheiben (61) aufnehmenden Aussparungen (65) versehen, vorzugsweise gabelförmig ausgebildet ist.

14. Schwingankermotor nach einem der Ansprüche 1 und 10 bis 13, dadurch gekennzeichnet, dass das eine Ende (68) der Drehfeder (62) in einen an dem Anker (45) angebrachten Bolzen (66) und das andere Ende (69) in einer sich achssenkrecht zur Verstellbewegung des Ankers (45) erstreckenden in die Kurvenscheibe (61) eingearbeiteten Aufnahmenut (67) oder einer Bohrung eingehängt ist.

15. Schwingankermotor nach einem der Ansprüche 1 und 10 bis 14, dadurch gekennzeichnet, dass die Anlageflächen der Kurvenscheiben (61') an dem Anker (45) durch eine oder mehrere an diesem angebrachte drehbar gelagerte Scheiben (71) gebildet sind.

16. Schwingankermotor nach einem der Ansprüche 1 und 10 bis 15, dadurch gekennzeichnet, dass das zu betätigende Glied (Kolben 52') des Gerätes (Spritzpistole 51) an dem Anker (45) angelenkt, vorzugsweise mittels des die an diesem angebrachten drehbaren Scheiben (71) tragenden Bolzen (66') gelenkig befestigt ist.

17. Schwingankermotor nach einem der Ansprüche 1 und 10 bis 16, dadurch gekennzeichnet, dass die Aussenkontur der Kurvenscheibe (61) derart gewählt ist, dass diese in jeder Schwenkstellung des Ankers (45) stets an der gleichen Stelle an diesem anliegt.

18. Schwingankermotor nach einem der Ansprüche 1 und 10 bis 16, dadurch gekennzeichnet, dass die Aussenkontur der Kurvenscheibe (61) und die Anlenkungen (66, 67) der Drehfeder (62) derart gewählt sind, dass in der Drehfeder (62) über den gesamten Schwenkbereich des Ankers (45) keine Federarbeit auftritt.

## Revendications

1. Moteur à induit oscillant pour l'entraînement d'appareils électriques, en particulier pour l'entraînement de pompes à piston pour pistolets pulvérisateurs à peinture, compresseurs à membrane, ou similaire, avec un stator supportant (3, 43) une bobine excitatrice (4, 44) et un induit (5, 45). Cet induit est logé à une extrémité de façon articulée et l'autre extrémité agit sur l'élément à actionner de l'appareil, ainsi désigné, de sorte que pour la commande du mouvement d'avance de l'extrémité de l'induit (5; 45) agissant sur l'élément à actionner (poussoir 12, piston 52). Cet induit est rigidement accouplé à une pièce constitutive fixe (paroi 9; stator 43) du moteur, au moyen d'un élément d'accouplement (20; 60) dont les articulations (25; 26; 66, 67) sont variables les unes par rapport aux autres, en fonction du mouvement de pivotement de l'induit (5; 45).

2. Moteur à induit oscillant, selon le droit 1, ainsi désigné, de sorte qu'en tant qu'élément d'accouplement (20) pour la limitation du mouvement de fermeture de l'induit (5), il est prévu un levier d'articulation à deux bras (21) s'avançant légèrement verticalement par rapport à l'induit. Avec une extrémité du levier d'articulation à deux bras, celui-ci agit de préférence sur l'élément à actionner (poussoir 12) de l'appareil (compresseur 11) dans la zone de l'induit. L'autre extrémité est articulée à la pièce fixe (œil 24). Le levier d'articulation (21) dispose d'une butée (31, 31') agissant avec un des bras du levier pivotants (22, 23) soit directement soit à l'aide d'un élément intermédiaire (29). L'avance de l'induit (5) dans le sens du stator (3) est limitée, ce qui conditionne la plage de pivotement du levier d'articulation (21).

3. Moteur à induit oscillant, selon le droit 1 ou 2, ainsi désigné, de sorte que le levier d'articulation (21) est relié de façon articulée avec celui-ci au moyen d'un boulon-palier (25) saisissant l'induit (5).

4. Moteur à l'induit oscillant, selon le droit 3, ainsi désigné, de sorte que l'élément (poussoir 12) à actionner de l'appareil (compresseur 11) est articulé à l'aide d'un boulon-palier (25) et qui est accroché de préférence à l'induit (5).

5. Moteur à induit oscillant, selon un des droit 1 à 4, ainsi désigné, de sorte que l'extrémité fixe du levier d'articulation (21) est maintenue de façon pivotante à l'aide d'un boulon d'articulation (26) dans un bossage-palier (24) ou similaire situé sur une paroi (9) du boîtier (2) logeant le moteur à induit oscillant (1).

6. Moteur à induit oscillant, selon un des droits 1 à 5, ainsi désigné, de sorte qu'un des deux bras (22, 23) du levier d'articulation (21), de préférence le bras du levier (22) articulé à l'induit (5). L'autre bras du levier (23) possède à son extrémité une chape (28) dans laquelle est en prise le bras fixe du levier articulé (23). Ce bras est articulé au moyen d'un axe d'articulation (27).

7. Moteur à induit oscillant, selon un des droits 1 à 6, ainsi désigné, de sorte qu'en tant qu'élément intermédiaire, il est prévu une plaque (29) fixée à un des bras du levier (22, 23) du levier d'articulation (21), de préférence à la pièce fixe (24) du bras de levier articulé (23), de cette manière le levier d'articulation (21) est fixé à la butée (31').

8. Moteur à induit oscillant, selon un des droits 1 à 7, ainsi désigné, de sorte que la butée (31, 31') est formée par une calotte (33; 36) en matériau déformable élastique placée légèrement à la verticale du levier d'articulation (21) et parallèlement à son axe, de préférence dans une paroi (9) du boîtier (1).

9. Moteur à induit oscillant, selon le droit 8, ainsi désigné, de sorte que la butée (31') réglable est insérée, par example, dans une douille réglable (35) maintenue dans un perçage fileté (34).

10. Moteur à induit oscillant, selon le droit 1, ainsi désigné, de sorte que l'élément d'accouplement (60) est formé par une ou plusieurs cames (61, 61') tournant sur le stator (43) et un ou plusieurs ressorts de torsion (62, 62') articulés à celles-ci et à l'induit (45).

11. Moteur à induit oscillant, selon le droit 1 ou 10, ainsi désigné, de sorte que la came (61) est logée, de façon tournante, sur un axe (64) maintenue dans un épaulement (63) en forme de fourche au centre du stator (43).

12. Moteur à induit oscillant, selon le droit 1 ou 10, ainsi désigné, de sorte que la came (61') est placée dans une ou deux extrémités du stator (43) et est logée de façon tournante sur l'axe (64') maintenu dans les épaulements (63') aux extrémités du stator.

13. Moteur à induit oscillant, selon un des droits 1, 11 et 12, ainsi désigné, de sorte que l'extrémité de l'élément à actionner (piston 52) est munie d'évidements (65) supportant les épaulements (63) placés sur le stator (43) et/ou les cames (61), conçue de préférence en forme de fourche.

14. Moteur à induit oscillant, selon un des droits 1 et 10 à 13, ainsi désigné, de sorte qu'une extrémité (68) du ressort de torsion (62) est accrochée dans un axe (66) placé sur l'induit (45) et qu'à l'autre extrémité (69) est accrochée dans une gorge (67) usinée dans la came (61) s'étendant verticalement à l'axe pour le mouvement de réglage de l'induit (45), ou dans un perçage.

15. Moteur à induit oscillant selon un des droits 1 et 10 à 14, ainsi désigné, de sorte que les faces d'appui des cames (61') sur l'induit (45) sont conçues par un ou plusieurs disques (71) logés de façon tournante placés sur celles-ci.

16. Moteur à induit oscillant, selon un des droits 1 et 10 à 15, ainsi désigné, de sorte que l'élément à actionner (piston 52') de l'appareil (pistolet pulvérisateur 51) est articulé à l'induit (45), de préférence au moyen de l'axe (66') supportant les disques tournant (71) placés sur celui-ci.

17. Moteur à induit oscillant, selon un des droits 1 et 10 à 16, ainsi désigné, de sorte que la forme extérieure de la came (61) est choisie de telle sorte que celle-ci porte toujours sur le même point à chaque mouvement de pivotement de l'induit (45).

18. Moteur à induit oscillant, selon un des droits 1 et 10 à 16, ainsi désigné, de sorte que la forme extérieure de la came (61) et les articulations (66, 67) du ressort de torsion (62) sont choisies de telle sorte qu'il ne se produise aucun travail du ressort, dans le ressort de torsion (62) sur toute la plage de pivotement de l'induit (45).

## Claims

1. Pendulum type armature motor for the drive of electric devices, particularly for the drive of piston pumps of paint spray guns, membrane compressors or the like comprising a stator (3; 43) having a field coil (4; 44) and comprising an armature (5; 45) assigned to the stator, which armature at its one end is pivoted and the other end of which is engaging the part to be driven, characterized in that for the control of the motion of the end of the armature (5; 45) engaging the means (plunger 12; piston 52) is compulsorily connected to a stationary mounted element (wall 9; stator 43) of the motor by means of a coupling device (20; 60) the hinge elements (25; 26; 66, 67) of which are variable one against the other depending from the armature's (5; 45) motion.

2. Pendulum type armature motor of claim 1, characterized in that as a coupling device (20) for the limitation of the closing motion of the armature (5) a two-armed joint lever (21) is provided being nearly perpendicular to the armature and being hinged with its one end preferably in the area of the armature assigned to the means (plunger 12) of the device (compressor 11) and with its other end to a stationary mounted element (eye 24), and that to the joint lever (21) a stop (31, 31') is assigned co-operating directly with one of the hingable levers (22, 23) or via an intermediate part (29), by means of which stop the swivelling range of the joint lever (21) determining the armature's motion in the stator's (3) direction may be limited.

3. Pendulum type armature motor of claim 1 or 2, characterized in that the joint lever (21) is hingable connected to the armature (5) by means of a bolt (25) running through the armature.

4. Pendulum type armature motor of claim 3, characterized in that the means (plunger 12) to be actuated of the device (compressor 11) is hinged to the bolt (25), preferably hooked in, which bolt connects the joint lever (21) to the armature (5).

5. Pendulum type armature motor of one of the claims 1 through 4, characterized in that the stationary supported end of the joint lever (21) is hinged by means of a bolt (26) to an eye (24) or the like mounted to a wall of the housing (2) of the pendulum type armature motor (1).

6. Pendulum type armature motor of one of the claims 1 through 5, characterized in that one of both of the arms (22, 23) of the joint levers (21), preferably of that joint lever (22) hinged to the armature (5) has a fork-shaped piece (28) at the end engaging the other joint lever (23), into which fork-shaped piece the stationary supported joint lever (23) is extending and in which the joint lever is hinged by means of a bolt (27).

7. Pendulum type armature motor of one of the claims 1 through 6, characterized in that as an intermediate part a plate (29) is provided mounted to one of the lever arms, preferably to that lever arm (23) hinged to the stationary supported part (eye 24), which plate extends from the lever arm, whereby the joint lever (21) is fixed when the plate engages the stop (31').

8. Pendulum type armature motor of one of the claims 1 through 7, characterized in that the stop (31, 31') is shaped as a cap (33; 36) made from resilient plastic material, located about perpendicular to the joint lever (21) or about parallel to the axis of same, preferably in a wall of the housing (1).

9. Pendulum type armature motor of claim 8, characterized in that the stop (31') is adjustably located, for example inserted into an adjustable jacket (35) sitting in a tapped hole (34).

10. Pendulum type armature mtor of claim 1, characterized in that the coupling member (60) is shaped as one or more cams (61, 61') rotary held at the stator (43) and one or more rotating springs (62, 62') hinged to the cam and to the armature (45).

11. Pendulum type armature motor of claim 1 or 10, characterized in that the cam (61) is rotary supported on a bolt (64) held at an extension (63) of the stator (43).

12. Pendulum type armature motor of claim 1 or 10, characterized in that the cam (61') is located in one or both of the random areas of the stator (43) and rotary supported from bolts (64) on extensions (63').

13. Pendulum type armature motor of one of the claims 1, 11 and 12, characterized in that the end of the means (piston 52) is preferably fork-shaped and is provided with an opening (65) taking over the extensions (63) mounted to the stator and/or the cam (61).

14. Pendulum type armature motor of one of the claims 1 and 10 through 13, characterized in that the one end (68) of the rotary spring (62) is hooked into a bolt (66) mounted to the armature (45) and the other end of which is hooked to into a groove (67) located in the cam (61) and oriented perpendicular to the axis of the movement of the armature (45) or hooked into a bore.

15. Pendulum type armature motor of one of the claims 1 and 10 through 14, characterized in that the armature's (45) surfaces engaged by the cam (61') are shaped as one or more disks (71).

16. Pendulum type armature motor of one of the claims 1 and 10 through 15, characterized in that the device's (spray gun 51) means (piston 52') to be actuated is hinged to the armature (45), preferably by means of rotary disks (71) supported by bolts (66').

17. Pendulum type armature motor of one of the claims 1 and 10 through 16, characterized in that the control edge of the cam (61) is designed in that way that the cam in any position during swivelling is engaging the armature (45) at the same location.

18. Pendulum type armature motor of one of the claims 1 and 10 through 16, characterized in that the control edge of the cam (61) and the fixing points (66, 67) of the rotary spring (62) are designed such that in the whole rotary area of the armature (45) there is no motion in the rotary spring (62).

FIG. 1

FIG. 2

0 116 869

1/3

9

FIG. 3

2/3

3/3

43

61

63

64

68

66

67  62  69

60

FIG. 5

63' 64' 71 45

66'

60

52' 61' 62'